Europäisches Patentamt

European Patent Office

Office européen des brevets

(19)

(11) Veröffentlichungsnummer : **0 108 066**
**B1**

(12) **EUROPÄISCHE PATENTSCHRIFT**

(45) Veröffentlichungstag der Patentschrift :
**18.06.86**

(21) Anmeldenummer : **83900029.6**

(22) Anmeldetag : **13.12.82**

(86) Internationale Anmeldenummer :
**PCT/EP 82/00263**

(87) Internationale Veröffentlichungsnummer :
**WO/8302116 (23.06.83 Gazette 83/15)**

(51) Int. Cl.⁴ : **C 08 G 18/69, C 09 D 3/36,
C 09 D 3/49, C 09 D 5/44,
C 08 G 18/80**

(54) WASSERVERDÜNNBARES BINDEMITTEL, VERFAHREN ZU DESSEN HERSTELLUNG UND DESSEN VERWENDUNG.

(30) Priorität : **16.12.81 DE 3149828**

(43) Veröffentlichungstag der Anmeldung :
**16.05.84 Patentblatt 84/20**

(45) Bekanntmachung des Hinweises auf die Patenterteilung : **18.06.86 Patentblatt 86/25**

(84) Benannte Vertragsstaaten :
**AT CH DE GB LI**

(56) Entgegenhaltungen :
**GB-A- 578 019
GB-A- 2 002 390
GB-A- 2 041 381**

(73) Patentinhaber : **HOECHST AKTIENGESELLSCHAFT
Postfach 80 03 20
D-6230 Frankfurt am Main 80 (DE)**

(72) Erfinder : **JUST, Christoph
Akazienweg 8
D-6272 Niedernhausen/Taunus (DE)**
Erfinder : **RITZ, Jürgen
Am Hipperich 68
D-6500 Mainz (DE)**
Erfinder : **ZIMMERMANN, Rolf
Pfahlerstrasse 35
D-6200 Wiesbaden (DE)**

EP 0 108 066 B1

Jouve, 18. rue St-Denis, 75001 Paris, France

**Beschreibung**

Die anodische Abscheidung von Elektrotauchlacken auf Basis von Dienpolymeren wie Butadienölen ist aus FR-A-2 372 198 bekannt. Die dabei erhaltenen Überzüge werden dann bei erhöhter Temperatur und/oder durch oxidative Polymerisation vernetzt. Die Vernetzung verläuft nur dann bedriedigend, wenn an der Anode freigesetzte Protonen in dem abgeschiedenen Produkt verbleiben, weil diese die Vernetzung katalysieren.

Ebenfalls bekannt sind Systeme für die kationische Elektrotauchlackierung auf Basis von niedermolekularen Methylbutadienpolymeren (DE-A-2 636 797). Diese bekannten Produkte werden durch Diels-Alder-Reaktion mit konjugierten Fettsäuren erhalten und sind nicht selbstvernetzend. Um eine Fremdvernetzung zu erreichen, werden Melamin-, Harnstoff- oder Benzoguanidinderivate als Vernetzer beigemischt. Dies bringt aber den Nachteil mit sich, daß die Härtungspartner durch die elektrische Abscheidung — bedingt durch unterschiedliche Wanderungsgeschwindigkeiten der einzelnen Komponenten — nicht gleichmäßig auf dem als Kathode geschalteten Blech abgeschieden werden und somit die eingentliche Härtungsreaktion nicht homogen verlaufen kann.

In einer weiteren Druckschrift (DE-A-2 711 425) werden Mischungen aus einem emulgierenden kationischen Harz und einem für sich allein nicht wasserdispergierbaren Kohlenwasserstoff beschrieben. Auch bei diesem System besteht die Gefahr einer ungleichmäßigen Abscheidung der Komponenten infolge unterschiedlicher Ladung und damit einer Entmischung des Bades.

Ferner sind Mischungen aus aminhaltigen organischen Polymerisaten und voll verkappten multifunktionellen Isocyanatverbindungen als zusätzlicher Härtungskomponente bekannt (DE-A-2 057 799). Voraussetzung für eine völlig homogene Vernetzung des abgeschiedenen Films ist dort eine auch zeitlich völlig gleichmäßige elektrische Abscheidung der beiden Härtungskomponenten. Durch unterschiedlichen chemischen Aufbau der Komponenten kann gegebenenfalls eine unterschiedliche elektrische Abscheidungstendenz der Komponenten eintreten, was die Verarmung oder Anreicherung einer der beiden Komponenten im Elektrotauchbad nach sich ziehen muß.

Der vorliegenden Erfindung liegt die Aufgabe zugrunde, Bindemittel zu entwickeln, die die Nachteile der bekannten Produkte vermeiden. Insbesondere sollen Bindemittel entwickelt werden, die selbsthärtend sind und somit die Gefahren einer Entmischung des Niederschlags während der elektrophoretischen Abscheidung vermeiden.

Gegenstand der Erfindung ist ein mit Wasser verdünnbares Bindemittel für Überzüge auf Basis von Umsetzungsprodukten aus Dienpolymeren und mehrfach ungesättigten Polyamidoaminen, das dadurch gekennzeichnet ist, daß es aus :

a) einem — gegebenenfalls phenolhaltigen — Cyclokautschuk,

b) einem an die Komponente a) addierten polyfunktionellen Amidoamin einer monomeren ungesättigten Fettsäure ohne konjugierte Doppelbindungen mit 12 bis 18 C-Atomen oder von deren Oligomeren und

c) einem an die Komponente b) gebundenen Polyisocyanat, dessen nicht an die Komponente b) gebundene Isocyanatgruppen verkappt sind, besteht.

Die Erfindung betrifft somit Umsetzungsprodukte des Cyclokautschuks, d. h. einer Ausgangssubstanz mit einem im Vergleich zu Polydienharzen sehr niedrigen Anteil an Doppelbindungen. Das hat den Vorteil, daß auch das erfindungsgemäße Bindemittel nur einen geringen Anteil an Doppelbindungen aufweist. Da diese Doppelbindungen bei kataphoretisch erhaltenen Überzügen auch nach der Härtung im Film verbleiben — weil sie nicht durch anodisch entstehende Protonen geöffnet werden — zeichnen sich die so hergestellten Überzüge überraschenderweise durch eine hohe Oxydationsbeständigkeit aus. Durch die verkappten Gruppen des eingebauten Isocyanats enthält das Bindemittel auch die für eine Vernetzung bei erhöhten Temperaturen erforderlichen funktionellen Gruppen. Da außerdem alle Komponenten des Bindemittels innerhalb eines Molekülverbands gebunden sind, müssen sie alle — auch über einen längeren Zeitraum — gleichmäßig abgeschieden werden, und zwar kathodisch, weil das Molekül durch die Amingruppen positiv geladen ist. Eine Verarmung des Bads an einer einzelnen Komponente sowie eine Entmischung tritt daher nicht ein. Hinzu kommt, daß die kathodische Abscheidung den Vorteil eines besseren Umgriffs und einer besseren Korrosionsbeständigkeit mit sich bringt.

Als Komponente a) lassen sich im allgemeinen vorteilhaft cyclisierter Naturkautschuk, der in den einzelnen Ketten Bereiche mit kondensierten hydroaromatischen Ringsystemen enthält, cyclisiertes Polyisopren und/oder cyclisiertes Polybutadien einsetzen. Besonders eignen sich Cyclokautschuktypen mit einem Molekulargewicht im Bereich von z. B. 5 000 bis 70 000, vorzugsweise 6 500 bis 45 000 bzw. Typen mit einer Jodzahl von 50 bis 200, vorzugsweise 60 bis 150. Bevorzugt sind Cyclokautschuktypen mit einkondensiertem Phenol, wobei der Phenolgehalt bis zu 15, vorzugsweise 3 bis 10 Gew.-% betragen kann.

Geeignete polyfunktionelle Amidoamine, die als Komponente b) eingesetzt werden können, sind z. B. Kondensationsprodukte von monomeren ungesättigten Fettsäuren mit 12 bis 18 C-Atomen ohne konjugierte Doppelbindungen oder von deren Oligomeren. z. B. Linolen-, Linol-, Öl-, Palmitolein-, Arachidonfettsäure bzw. deren Gemische, wie Tallölfettsäure, Sojaölfettsäure, sowie deren mögliche

2

Isomeren, dimerisierte Fettsäuren der o. a. Säuren mit 12 bis 18 C-Atomen, mit Polyalkylenpolyaminen. z. B. aliphatischen Polyaminen mit 2 bis 12, vorzugsweise bis 8 C-Atomen, wie Äthylendiamin, Diäthylentriamin, Triäthylentetramin, Propylen- und Dipropylentriamin, Tripropylentetramin, ferner aromatischen Aminen, wie Diaminodiphenyl, Diaminophenylamin, Diaminophenylmethan bzw. -propan, jeweils einzeln oder im Gemisch. Diese ungesättigten flüssigen bis festen reaktiven Polyamidoamine enthalten primäre, sekundäre und/oder tertiäre Amingruppen, aber keine konjugierten Doppelbindungen. Sie können auch Imidazolinstrukturen aufweisen, die bei der Fortführung der Kondensationsreaktion durch Wasserabspaltung zwischen einer Aminofunktion und einem Carboxyl der Amidgrupe entstehen. Über die Wahl des Polyalkylenpolyamins für die Kondensationsreaktion läßt sich der Amingehalt der Komponente b) steuern. Verbindungen mit einem Gehalt an 1 bis 14 mMol mit Salzsäure titrierbaren Amingruppen pro g Polyamidoamin sind bevorzugt. Durch den Amingehalt und die Auswahl der Amin- bzw. Fettsäurekomponente einerseits und des Cyclokautschuks andererseits lassen sich das Molekulargewicht, Elastizität, Weichheit sowie Vernetzungsgrad der Endprodukte je nach dem gewünschten Verwendungszweck steueren bzw. gegenseitig abstimmen.

Die Komponente c) leitet sich von teilweise verkappten Polyisocyanatverbindungen ab, die mindestens eine freie Isocyanatgruppe im Molekül aufweisen. Als Verkappungsmittel dienen im allgemeinen geradkettige, verzweigte oder cyclische Alkohole mit bis zu 18, vorzugsweise bis zu 8 C-Atomen wie Butanol, Hexanol, 2-Äthylhexanol, Cyclohexanol, Äthylenglykolmonoäthyläther und Äthoxylierungsderivate des Äthylenglykolmonoäthyläthers einschließlich tertiären Alkoholen. Ferner können die Isocyanate auch mit anderen üblichen Gruppen, wie Phenolen, Lactamen, z. B. ε-Caprolactam, Oximen und/oder mit basischen Stickstoff-Verbindungen verkappt sein, die entweder tertiären Stickstoff oder verkappte Amingruppen aufweisen, wie Schiff'schen Basen, z. B. solchen aus Aminoäthanol und Cyclohexanol oder aus primären Aminen und Methyläthylketon ; oder Aminoalkohole, z. B. Aminoäthanol und/oder -propanol. Die Amingruppe ist darin blockiert, um eine unerwünschte Harnstoffbindung mit der Isocyanatgruppe zu vermeiden. Die Verkappungsmittel werden in an sich bekannter Weise mit den Polyisocyanaten im allgemeinen bei Temperaturen unterhalb von 100 °C, gegebenenfalls in Anwesenheit eines inerten Lösungsmittels und/oder eines Katalysators umgesetzt.

Als Polyisocyanate kommen die üblichen Verbindungen in Frage, wie 2,4- oder 2,6-Toluylendiisocyanat, Xylylendiisocyanat, Diphenylmethan-4,4'-diisocyanat, Triphenylmethyl-4,4',4''-triisocyanat, Polyphenyl-polymethyl-isocyanat, Isophorondiisocyanat, Hexamethylendiisocyanat, 2,2,4(2, 4,4)-Trimethylhexamethylendiisocyanat, Methylcyclohexyldiisocyanat, Dicyclohexylmethyldiisocyanat, Diäthylfumarhexyldiisocyanat, Bis-(3-Methyl-4-isocyanatocyclo-hexyl-)methan, 2,2-Bis-(4-isocyanattocyclo-hexyl-)propan, der Methylester des Lysindiisocyanats, das Biuret des Hexamethylendiisocyanats oder auch oligomere Diisocyanate, wie Diisocyanate dimerer Säuren, 1-Methyl-benzol-2,4,5-triisocyanat, Biphenyl-2,4,4'-triisocyanat, Triphenylmethantriisocyanat, das Triisocyanat aus 3 Mol Hexamethylendiisocyanat und 1 Mol Wasser mit 16 % NCO-Gehalt und weitere wenigstens zwei NCO-Gruppen pro Molekül enthaltende Verbindungen.

Die Erfindung betrifft auch ein Verfahren zur Herstellung der erfindungsgemäßen Bindemittel, bei dem ein gegebenenfalls phenolhaltiger Cyclokautschuk a) zunächst mit b) einem reaktiven Polyamidoamin einer olefinischen ungesättigten monomeren Fettsäure ohne konjugierte Doppelbindungen oder deren Oligomeren bei erhöhter Temperatur umgesetzt wird, worauf das so erhaltene Reaktionsprodukt bei einer niedrigeren Temperatur als in der 1. Stufe mit einem teilweise verkappten Polyisocyanat weiter umgesetzt wird, wobei das Polyisocyanat zweckmäßig nur so weit verkappt ist, daß noch eine frei Isocyanatgruppe im Molekül enthalten ist.

Je nachdem, ob man von einem nieder- oder hochmolekularen Cyclokautschuk ausgeht, erhält man je nach Wunsch ein oligomeres oder höhermolekulares Endprodukt. Ferner kann eine höhere Aminfunktionalität bei einem niedrigen Fettsäuregehalt bewirken, daß Produkte mit einem niedrigen Molekulargewicht entsthen und umgekehrt. Die höhere Aminfunktionalität bewirkt wegen der dadurch verursachten stärkeren Vernetzung beim gehärteten Produkt eine erhöhte Chemikalienbeständigkeit und Korrosionsfestigkeit.

Durch Zusatz eines Polydiens ohne konjugierte Doppelbindungen zum Cyclokautschuk in einem Anteil von maximal 40 Gew.-%, bezogen auf die Summe von Cyclokautschuk und Polydien, vor der Umsetzung in erster Stufe kann dem Bindemittel z. B. eine höhere Plastizität bzw. ein elastomerer Charakter verliehen sowie eine Steuerung der Molekulargewichtsverteilung bewirkt werden. Geeignet sind hierfür Polymerisate auf Basis von Cyclopentadien, Methylcyclopentadien oder Polybuttadien mit einem Molekulargewicht von im allgemeinen 1 000 bis 50 000, vorzugsweise 1 500 bis 10 000.

Um die Plastizität zu steuern, kann man aber auch das Polydien dem Bindemittel zusetzen. In diesem Falle werden höchstens 60, insbesondere 20 bis 40 Gew.-%, bezogen auf die Summe von Polydien und dem im Bindemittel eingebauten Cyclokautschuk, zugemischt.

Das Gewichtsverhältnis der Komponente a) zur Komponente b) kann dabei z. B. in einem Verhältnis von 1 : 2 bis 5 : 1, vorzugsweise 1 : 1,5 bis 4 : 1 liegen. Die Art und Menge des Polyamidoamins wird gewöhnlich so gewählt, daß das Reaktionsprodukt von a) und b) eine Aminfunktionalität von ca. 3,5 bis 0,5 mMol mit Salzsäure titrierbare Amin-Gruppen pro g Harz enthält. In manchen Fällen kann die Aminfunktionalität auch ober- oder unterhalb des angegebenen Bereichs liegen. In der Regel wird man sie so abstimmen, daß ein für die Wasserlöslichkeit günstiges Neutralisationsäquivalent gewährleistet ist.

Das bedeutet, daß je nach dem Amingehalt nach der Neutralisation eine ausreichende Wasserverdünnbarkeit im neutralen, sauren oder alkalischen pH-Bereich gegeben ist.

Die Reaktion der Komponenten a) und b) erfolgt entweder in der Schmelze oder unter Mitverwendung eines inerten Lösungsmittels, in der Regel bei Temperaturen von 140 bis 300 °C. vorzugsweise 160 bis 280 °C. Als Lösungsmittel eignen sich insbesondere aprotische Lösungsmittel. wie Toluol. Xylol. ein Gemisch aliphatischer und/oder aromatischer Kohlenwasserstoffe (Siedebereich 160 bis 210 °C). Chlorbenzol, Diäthylenglykolmethyläther, jeweils einzeln oder im Gemisch.

Die Reaktion in zweiter Stufe wird gewöhnlich in Gegenwart eines inerten Lösungsmittels und gegebenenfalls eines Katalysators in üblicher Weise durchgeführt. Die Temperatur für die Umsetzung in zweiter Stufe liegt je nach dem verwendeten Isocyanat gewöhnlich bei 0 bis 120 °C. Geeignete Lösungsmittel für diese Reaktion sind die oben genannten, ferner Äther wie Mono-, Di- und Triäthylenglykoldimethyläther, Äthylenglykolmonoäthylätheracetat, Ketone, wie Methyl- oder Butylisobutylketon. jeweils einzeln oder vorzugsweise im Gemisch, insbesondere Gemische aus aromatischen Kohlenwasserstoffen mit hochsiedenden Äthern, jeweils einzeln oder im Gemisch.

Geeignete Katalysatoren sind z. B. Dibutylzinndilaurat, Dibutylzinnacetat und Zinn-Octoat.

Zur Charakterisierung der aus den Komponenten a) und b) in erster Stufe erhaltenen Reaktionsprodukte dient der RI-Wert. Er gibt die Anzahl der Gruppen in mMol/g im Reaktionsprodukt an. die noch mit Isocyanatgruppen reaktiv sind. Der RI-Wert der Produkte kann z. B. zwischen 1,5 und 7, vorzugsweise 1.5 und 3 schwanken. Zuweilen kann er auch über- oder interschritten werden. Gewöhnlich werden bei der Reaktion in zweiter Stufe 30 bis 70 % der durch den RI-Wert repräsentierten Gruppen mit Polyisocyanaten umgesetzt.

Der RI-Wert wird wie folgt ermittelt : Das in erster Stufe erhaltene Reaktionsprodukt wird in Chlorbenzol gelöst, mit überschüssigem Isocyanat versetzt und 15 Minuten bei Raumtemperatur belassen. Nun wird mit einem Überschuß an n-Butylamin versetzt und 15 Minuten bei Raumtemperatur gewartet. Das überschüssige Butylamin wird mit 1-normaler Salzsäure gegen Bromphenolblau titriert. Aus der Differenz zwischen eingesetztem und verbrauchtem Butylamin ergibt sich der RI-Wert.

Die erfindungsgemäßen Bindemittel lassen sich vielseitig verwenden. beispielsweise vor allem zur Herstellung von Auskleidungen und Überzügen auf Metall, Holz, Glas, Keramik. Baustoffen, oder dergl. Das Aufbringen der Überzüge kann in unterschiedlicher Weise. z. B. durch Streichen, Sprüchen, Spritzen, gegebenenfalls in Gegenwart eines Lösungsmittels oder auch in wäßrigen Systemen. z. B. durch Tauchlackierung, insbesondere durch Elektrotauchlackierung, und zwar vor allem kathodisch erfolgen.

Für die Verarbeitung in wäßrigen Systemen wird man zweckmäßig die verbliebenen Amingruppen des in zweiter Stufe erhaltenen Reaktionsprodukts nach der Umsetzung mit dem Isocyanat zumindest teilweise mit organischen und/oder anorganischen Säuren, wie Ameisäure, Essigsäure. Milchsäure. Phosphorsäure oder dergleichen neutralisieren. Der Neutralisationsgrad hängt im Einzelfall von den Eigenschaften des verwendeten Bindemittels ab. Bei der richtigen Auswahl der Komponenten können die erfindungsgemäßen Bindemittel bereits bei einem pH-Wert von 5 bis 8, vorzugsweise um den Neutralisationspunkt, in Wasser gelöst bzw. emuliert werden.

Für die Elektrotauchlackierung ist eine Bindemittelkonzentration von 3 bis 30, vorzugsweise 10 bis 20 Gew.-% im wäßrigen Bad zweckmäßig. Dem Elektrotauchbad können gegebenenfalls auch übliche Zusatzstoffe, wie Pigmente, Füllstoffe, oberflächenaktive Mittel und dergleichen, zugesetzt werden.

Nach der kathodischen Abscheidung läßt sich der Überzug im allgemeinen bei erhöhter Temperatur. z. B. bei 130 bis 200, vorzugsweise 150 bis 180 °C beispielsweise innerhalb von 5 bis 30, vorzugsweise 10 bis Minuten härten.

In den folgenden Beispielen sind, T Gew.-Teile, % Gew.-% und Verhältnisse jeweils auf Gewicht bezogen.

I. Herstellung des Cyclokautschuk-Addukts als Vorprodukt

A) In einem Reaktionskolben mit Rührer, Rückflußkühler, Inertgaszufuhr und Thermometer wurden 800 g Cyclokautschuk mit einem mittleren Molekulargewicht von 7 000, einem Phenolgehalt von ca. 7,5 % und einer Jodzahl von 74 gemeinsam mit 1 000 g eines Polyamidoamins mit einem Amingehalt von 6.6 mMol pro g vorgelegt. Die Reaktionsmischung wurde unter einer Atmosphäre von Inertgas. wie Stickstoff. auf 260 °C erhitzt und 16 Stunden bei dieser Temperatur gerührt. Man erhielt ein Produkt mit einem Amingehalt von 2,3 mMol/g und einer RI-Zahl von 4,9 mMol/g. Die Viskosität des Produktes. gemessen 2 : 1 in Xylol. betrug 560 mPa·s. Eine mit Essigsäure neutralisierte Probe war in Wasser löslich.

B) In einem gleichartigen Reaktionsgefäß wie für das Produkt A wurden 1 250 g eines Cyclokautschuks mit einem mittleren Molekulargewicht von 25 000, einem Phenolgehalt von ca. 4.6 % und einer Jodzahl von 90-95 gemeinsam mit 1 250 g eines Polyamidoamins mit einem Amingehalt von 6.6 mMol/g vorgelegt. Die Reaktionsmischung wurde auf 260 °C erhitzt und 19 Stunden bei dieser Temperatur gerührt. Man erhielt ein Produkt mit einem Amingehalt von 2,1 mMol/g, einer RI-Zahl von 4,6 mMol/g und einer Viskosität. gemessen 2 : 1 in Xylol, von 950 mPa·s. Eine mit Essigsäure neutralisierte Probe war in Wasser löslich.

C) In einem gleichartigen Reaktionsgefäß wie bei A wurden 666 g eines Cyclokautschuks wie bei A gemeinsam mit 333 g eins Cyclopentadienharzes und 500 g eines Polyamidoamins wie bei A unter eine

# 0 108 066

Atmosphäre von Inertgas, wie Stickstoff, auf 275 °C erhitzt und 8 Stunden bei dieser Temperatur gehalten. Man erhielt ein Produkt mit einem Amingehalt von 1,5 mMol/g und einer RI-Zahl von 3,1 mMol/g und einer Viskosität, gemessen 2 : 1 in Xylol, von 3 986 mPa·s. Nach Zugabe von Ameisensäure wurde eine wäßrige Emulsion erhalten.

D) In einem gleichartigen Reaktionsgefäß wie bei A wurden 933 g eines Cyclokautschuks wie bei A mit 466 g eines Polybutadienöls mit einem mittleren Molekulargewicht von 1 500 sowie 560 g eines Polyamidoamins (hergestellt aus Sojafettsäure und Diäthylentriamin mit einem Amingehalt (mit HCl titirierbares Amin) von 4,9 mMol/g) unter Inertgas auf 270 °C erhitzt und 10 Stunden lang geführt. Man erhielt ein Produkt mit einem Amingehalt von 1,23 mMol/g, einer RI-Zahl von 2,23 mMol/g und einer Viskosität gemessen 1 : 1 in Xylol, von 150 mPa·s.

II. Beispiele

1. 100 g des Addukts A wurden in 55 g Äthylenglykoldimethyläther/Toluol 3 : 1 gelöst. 32,8 g einer 60 %igen Lösung von mit N,N-Dimethylaminoäthanol einseitig verkapptem 2,4-Toluylendiisocyanat wurden bei 60 °C innerhalb von 90 min dosiert, anschließend wurden 27,6 g einer 75 %igen Lösung eines mit Äthylenglykolmonoäthyläther einseitig verkappten 2,4-Toluylendiisocyanats innerhalb von 30 min bei 60 °C dosiert. Nach einer Reaktionszeit von 75 Minuten war die Reaktion beendet. Es wurde auf Raumtemperatur abgekühlt. Nach Neutralisation mit Essigsäure wurde mit destilliertem Wasser auf eine 15 %ige Lösung verdünnt. pH-Wert der Lösung 6,9, Leitfähigkeit 1 500 µS.

2. 100 g des Umsetzungsproduktes B wurden in 66 g Äthylenglykoldimethyläther/Toluol 3 : 1 gelöst. Bei 20 °C wurden 70 g einer 60 %igen Lösung in Äthylenglykoldimethyläther/Toluol 3 : 1 eines mit tert.-Butanol einseitig verkappten 2,4-Toluylendiisocyanats in einer Stunde zudosiert. Nun wurde auf 60 °C aufgeheizt und 1 Stunde nachreagiert. Nach Neutralisation mit Essigsäure wurde mit destilliertem Wasser auf eine 15 %ige Lösung verdünnt. Der pH-Wert der Lösung lag bei 6,4, die Leitfähigkeit bei 1 100 µS.

3. 150 g des Addukts C wurden in 100 g Äthylenglykoldimethyläther/Toluol 3 : 1 gelöst. Bei 60 °C wurden 29,5 g einer 60 %igen Lösung in Äthylenglykoldimethyläther/Toluol 3 : 1 eines mit N,N-Dimethylaminoäthanol einseitig verkappten 2,4-Toluylendiisocyanats innerhalb von 1 Stunde zudosiert. Anschließend wurden 105 g einer 60 %igen Lösung im gleichen Lösungsmittelgemisch eines mit 2-Äthylhexanol einseitig verkappten 2,4-Toluylendiisocyanats innerhalb 30 min zudosiert. Nach 90 min war die Reaktion beendet. Man kühlte auf Raumtemperatur ab. 200 T dieser Lösung wurden mit 12 g einer 30 %igen Essigsäure neutralisiert und mit 588 g destilliertem Wasser verdünnt. Der pH-Wert der Lösung lag bei 6,7, die Leitfähigkeit bei 1 200 µS.

4. 1 000 g des Addukts D wurden in Äthylenglykoldimethyläther/aliphatisches Kohlenwasserstoffgemisch, Siedebereich 160 bis 180 °C (5 : 1) 60 %ig gelöst. Bei 20 °C wurden innerhalb einer Stunde 244 g einer 60 %igen Lösung im gleichen Lösungsmittel von einem mit N,N-Dimethylaminoäthanol einseitig verkappten 2,4-Toluylendiisocyanat zudosiert. Anschließend wurden bei 40 °C innerhalb von 1 Stunde 256 g einer 60 %igen Lösung im gleichen Lösungsmittelgemisch wie oben eines mit Äthylenglykolmonoäthyläther einseitig verkappten 2,4-Toluylendiisocyanat zudosiert. Darauf ließ man noch 2 Stunden bei 60 °C nachreagieren. Nun wurde auf Raumtemperatur abgekühlt.

III. Kataphoretische Abscheidung eines nach Beispiel 4 hergestellten Kataphoreselackes

Pigmentierung

a) Pigmentpaste :

| | |
|---|---|
| Produkt nach Beispiel 4 | 420  (252 T Festkörper) |
| Essigsäure 5-normal | 45 |
| Butanol | 56 |
| deionisiertes Wasser | 300 |
| Ruß | 4,2 |
| Aluminiumsilikatpigment | 46,2 |
| Titandioxid | 420 |
| Bleisilikat | 33,6 |
| | 1 325 |

wurden 10 min in einem mit schnell laufendem Rührer versehenen Reaktionsgefäß dispergiert. danach erfolgten zwei Durchgänge auf einen Dreiwalzenstuhl.

b) Bindemittelkomponente :

| | |
|---|---|
| Produkt nach Beispiel 4 | 979 (587,4 T Festkörper) |
| Essigsäure 5-normal | 70 |
| deionisiertes Wasser | 600 |
| | 1 649 |

5

c) Zusammensetzung des Bades :

| | |
|---|---:|
| Pigmentpaste | 1 325 |
| Bindemittelkomponente | 1 649 |
| deionisiertes Wasser | <u>4 026</u> |
| | 7 000 |

Baddaten :

| | |
|---|---:|
| Festkörper | 19.2 % |
| pH-Wert | 6.7 |
| Leitfähigkeit (bei 25 °C) | 1 500 $\mu S \cdot cm^{\cdot}$ |
| Bodendsatz (nach 24 h) | keiner |

### Kataphoretische Abscheidung

| | |
|---|---|
| Kathode : Anode     Material | = gebondertes Blech |
| Verhältnis | = 1 : 1 |
| Abstand | = 15 cm |
| Abscheidungszeit | = 120 s |
| Abscheidungsspannung | = 350 Volt |
| Einbrennbedingungen | = 180 °C/30 min |

### Ausprüfung

| | |
|---|---|
| Schichtdicke | ca. 19 $\mu$m |
| Korrosionsfestigkeit im Salzsprühtest (ASTM B 117-64) | |
| Belastungsdauer 500 h | |
| Kreuzschnitt | 0.5 mm |
| Kante | 0 mm |
| Blasengrad (DIN 53 209) | $M_0G_0$ |
| Steinschlagtest (nach VW-Spezifikation Nr. 3.14.3) | |
| beschädigte Flächen, visuell | ca. 2 % |
| Kennwerte nach VW-Skala* | 1 |
| Umgriff (Fordbox-Methode, EU BI 20-2C) | |
| a) sichtbar (« Throwing Power ») | 225 mm |
| b) 10 $\mu$m-Grenze | 115 mm |
| c) Korrosionslinie | 160 mm |

* 1 = bester Wert, 10 = schlechtester Wert.

## Patentansprüche

1. Mit Wasser verdünnbares Bindemittel für Überzüge auf Basis von Umsetzungsprodukten aus Dienpolymeren und mehrfach ungesättigten polyfunktionellen Amidoaminen, dadurch gekennzeichnet, daß es aus
    a) einem Cyclokautschuk,
    b) einem an die Komponente a) addierten polyfunktionellen Amidoamin einer monomeren ungesättigten Fettsäure ohne konjugierte Doppelbindungen mit 12 bis 18 C-Atomen oder von deren Oligomeren und
    c) einem an die Komponente b) gebundenen Polyisocyanat, dessen nicht an die Komponente b) gebundene Isocyanatgruppen verkappt sind, besteht.

2. Bindemittel nach Anspruch 1, dadurch gekennzeichnet, daß die Komponente a) ein Cyclokautschuk mit einer Jodzahl von 50 bis 250, vorzugsweise 60 bis 150, ein Cyclokautschuk mit einem Phenolgehalt von bis zu 15 Gew.-% und/oder einem Molekulargewicht im Bereich von 5 000 bis 70 000 ist.

3. Bindemittel nach Anspruch 1 oder 2, dadurch gekennzeichnet, daß die Komponente b) eine polyfunktionelles Amidoamin von Tallölfettsäure oder einer dimerisierten Fettsäure mit ursprünglich 18 C-Atomen ist.

4. Bindemittel nach einem oder mehreren der Ansprüche 1 bis 3, dadurch gekennzeichnet, daß die Komponente c) ein Diisocyanat ist, das mit einem Aminoalkohol oder einem einwertigten Alkohol teilweise verkappt ist.

5. Bindemittel nach einem oder mehreren der Ansprüche 1 bis 4, dadurch gekennzeichnet, daß es zusätzlich ein Polydien ohne konjugierte Doppelbindungen enthält, das zusammen mit der Komponente a) in einem Anteil von maximal 40 Gew.-% umgesetzt oder in einem Anteil von höchstens 60, insbesondere 20 bis 40 Gew.-% bezogen auf die Summe von Polydien und Cyclokautschuk, dem Bindemittel zugemischt ist.

6. Verfahren zur Herstellung eines Bindemittels nach einem oder mehreren der Ansprüche 1 bis 5, dadurch gekennzeichnet, daß ein Cyclokautschuk zunächst mit einem polyfunktionellen Amidoamin einer monomeren olefinisch ungesättigten Fettsäure ohne konjugierte Doppelbindungen mit 12 bis 18 C-Atomen oder deren Oligomeren bei erhöhter Temperatur umgesetzt wird, worauf das so erhaltene Reaktionsprodukt bei einer niedrigeren Temperatur als in der ersten Stufe mit einem teilweise verkappten Polyisocyanat weiter umgesetzt wird, wobei das Polyisocyanat zweckmäßig nur so weit verkappt ist, daß noch mindestens eine freie Isocyanatgruppe im Molekül enthalten ist.

7. Verfahren nach Anspruch 6, dadurch gekennzeichnet, daß die Komponente a) mit der Komponente b) in einem Gewichtsverhältnis von 1 : 2 bis 5 : 1, vorzugsweise 1 : 1,5 bis 4 : 1 umgesetzt wird.

8. Verfahren nach Anspruch 6 oder 7, dadurch gekennzeichnet, daß 30 bis 70 % der mit Isocyanat reaktiven Gruppen des in 1. Stufe erhaltenen Reaktionsproduktes mit dem Polyisocyanat c) umgesetzt werden.

9. Verfahren nach einem oder mehreren der Ansprüche 6 bis 8, dadurch gekennzeichnet, daß ein Anteil von maximal 40 Gew.-% eines Polydiens ohne konjugierte Doppelbindungen vor der Umsetzung in erster Stufe dem Cyclokautschuk zugesetzt wird, wobei der Anteil sich auf die Summe von Cyclokautschuk und Polydien bezieht.

10. Verwendung des Bindemittels nach Ansprüchen 1 bis 5 für Anstrichmittel und Überzüge, vorzugsweise zur Elektrotauchlackierung, insbesondere zur kataphoretischen Abscheidung.

## Claims

1. A water-dilutable binder for surface coatings based on reaction products of diene polymers and poly-unsaturated polyfunctional amidoamines, characterized in, that it consists of
   a) a cyclorubber,
   b) a polyfunctional amidoamine which has been added to component a) and is derived from a monomeric unsaturated fatty acid without conjugated double bonds but having 12 to 18 carbon atoms or from its oligomers, and
   c) a polyisocyanate which is bonded to component b) and whose isocyanate groups which are not bonded to component b) are blocked.

2. A binder as claimed in claim 1, characterized in, that component a) is a cyclorubber having an iodine number of 50 to 250, preferably 60 to 150, or a cyclorubber having a phenol content of up to 15 % by weight and/or a molecular weight within a range of 5,000 to 70,000.

3. A binder as claimed in claim 1 or 2, characterized in, that component b) is a polyfunctional amidoamine of a tall oil fatty acid or of a dimerized fatty acid having originally 18 carbon atoms.

4. A binder as claimed in one or more of claims 1 to 3, characterized in that component c) is a diisocyanate which is partially blocked with an aminoalcohol or a monohydric alcohol.

5. A binder as claimed in one or more of claims 1 to 4, characterized in, that it also contains a polydiene which does not contain conjugated double bonds and which reacted with component a) in a proportion of at most 40 % by weight of, together with component a), is admixed to the binder in a proportion of at most 60, in particular 20 to 40 % by weight, relative to the total of polydiene and cyclorubber.

6. A process for preparing a binder as claimed in one or more claims 1 to 5, characterized in, that a cyclorubber is first reacted with a polyfunctional amidoamine of a monomeric olefinic unsaturated fatty acid without conjugated double bonds but with 12 to 18 carbon atoms or of its oligomers at elevated temperature, whereupon the reaction product thus obtained is further reacted at a temperature lower than in the first stage with a partially blocked polyisocyanate, which is advantageously blocked only to such an extent that at least one free isocyanate group is still contained in the molecule.

7. The process as claimed in claim 6, characterized in, that component a) is reacted with component b) in a weight ratio of 1 : 2 to 5 : 1, preferably 1 : 1.5 to 4 : 1.

8. The process as claimed in claim 6 or 7, characterized in, that 30 to 70 % of the groups of the reaction product which is obtained in the 1st stage which react with isocyanate are reacted with polyisocyanate c).

9. The process as claimed in one or more of claims 6 to 8, characterized in, that a proportion of at most 40 % by weight of a polydiene without conjugated double bonds is added to the cyclorubber for the reaction in the first stage, the proportion being relative to the total of cyclorubber and polydiene.

10. The use of a binder as claimed in claims 1 to 5, for paints and surface coatings, preferably for electrocoating, in particular for cataphoretic deposition.

7

**Revendications**

1. Liant pour revêtements, diluable à l'eau, à base de produits résultant de la réaction de polymeres de diènes et d'amido-amines polyfonctionnelles polyinsaturées, liant caractérisé en ce qu'il est constitué :

a) d'un caoutchouc cyclique,

b) d'une amido-amine polyfonctionnelle, fixée sur la composante a), qui dérive d'un acide gras insaturé monomère, sans doubles liaisons conjuguées, contenant de 12 à 18 atomes de carbone. ou d'oligomères de celui-ci, et

c) d'un polyisocyanate, lié à la composante b), dont les radicaux isocyanato non unis à la composante b) sont masqués.

2. Liant selon la revendication 1 caractérisé en ce que la composante a) est un caoutchouc cyclique qui a un indice d'iode de 50 à 250, de préférence de 60 à 150, un caoutchouc cyclique qui a une teneur en phénol pouvant aller jusqu'à 15 % en poids et/ou une masse moléculaire comprise entre 5 000 et 70 000.

3. Liant selon l'une des revendications 1 et 2, caractérisé en ce que la composante b) est une amido-amine polyfonctionnelle dérivant de l'acide gras du tallöl ou d'un acide gras dimérisé contenant. à l'origine, 18 atomes de carbone.

4. Liant selon une ou plusieurs des revendications 1 à 3, caractérisé en ce que la composante c) est un di-isocyanate partiellement masqué par un amino-alcool ou un alcool monovalent.

5. Liant selon une ou plusieurs des revendications 1 à 4, caractérisé en ce qu'il contient en outre un polydiène sans doubles liaisons conjuguées qui a réagi en une proportion d'au plus 40 % en poids avec la composante a) ou qui a été mélangé au liant en une proportion d'au plus 60 % en poids, plus spécialement de 20 à 40 % en poids, par rapport à la somme du polydiène et du caoutchouc cyclique.

6. Procédé de préparation d'un liant selon une ou plusieurs des revendications 1 à 5, procédé caractérisé en ce qu'on fait réagir un caoutchouc cyclique d'abord avec une amido-amine polyfonctionnelle dérivant d'un acide gras éthylénique monomère, sans doubles liaisons conjuguées, contenant de 12 à 18 atomes de carbone, ou d'un oligomère de celui-ci, à température élevée. après quoi on fait réagir le produit réactionnel ainsi obtenu, à une température plus basse que dans la première étape. avec un polyisocyanate partiellement masqué, le masquage du poly-isocyanate n'étant avantageusement poussé que jusqu'à un point tel qu'il y ait encore au moins un radical isocyanato libre dans la molécule.

7. Procédé selon la revendication 6 caractérisé en ce qu'on fait réagir la composante a) avec la composante b) dans un rapport pondéral compris entre 1 : 2 et 5 : 1, de préférence entre 1 : 1.5 et 4 : 1.

8. Procédé selon l'une des revendications 6 et 7, caractérisé en ce qu'on fait réagir avec le polyisocyanate c) de 30 à 70 % des radicaux réactifs (à l'égard des radicaux isocyanato) contenus dans le produit réactionnel obtenu dans la première étape.

9. Procédé selon une ou plusieurs des revendications 6 à 8, caractérisé en ce qu'on ajoute au caoutchouc cyclique, avant la réaction dans la première étape, une proportion d'au plus 40 % en poids d'un polydiène sans doubles liaisons conjuguées, par rapport à la somme du caoutchouc cyclique et du polydiène.

10. Application du liant selon l'une des revendications 1 à 5 dans des peintures et des produits de revêtements, de préférence pour le trempage électrophorétique, plus spécialement pour le dépôt cataphorétique.

8